# EUROPEAN PATENT APPLICATION

(11) **EP 0 647 816 A1**
(43) Date of publication of application: **12.04.1995**
(21) Application number: 93116393.5
(22) Date of filing: 09.10.1993
(51) Int. Cl.: F23G 5/16, F23G 5/46

(54) **Elimination plant for toxic residues**

(71) Applicant: Albertazzi, Giovanni, I-40133 Bologna (IT)
(72) Inventor: Albertazzi, Giovanni, I-40133 Bologna (IT)
(74) Representative: Sassatelli, Franco T., Dr.

(57) **Abstract**

Incineration system in which liquid toxic residues are pumped from a tank (1) and injected by an injector (4) into the melt of a reactor (6) equipped with four burners in the upper part and maintained at a temperature of 1.550⁰ C. The cover of the reactor is provided with an outlet (9) for the fumes passing a duct (10) to a combustion chamber (11) with three burners (12) and an air intake system (13) through the refractory pipe (14). The flue gases flow through this refractory pipe to a steam boiler (15), which is connected to a turbine (17) with generator (18). Through pipe (20) the flue gases enter a duct (21) for treatment with chemical reagents and pass a electrostatic filter (22).

## Description

The invention refers to an incinerator for toxic residues which permits their total elimination letting in the end only an emission of aggregate under the form of dross. Particularly in the big cities actually are used large incinerators which destroy by combustion all the waste.

In the case that it was necessary to act on toxic residues for the human body and for the environment for making inert the combustion residues are now used higher temperatures. In said plants the toxic residues are initially subjected to a preliminary treatment into pre-combustion sectors by means of burners and then they reach for the working completion into a combustion rotating chamber also this one equipped with the already said means. These plants have the big problem to request for their realization large structures with consequent very high execution and operating costs, while in the working they present an intrinsic slowness in the treatments since the temperatures to be used must be put in relation each time to the kind and in particular to the danger of the working materials. Moreover said plants do not offer an acceptable security on the working residue inertization since the index of danger can to be not identified with exactness and however the temperature can result insufficient in relation to the combustion type that these current means used. To all already said is then necessary to add that, since said combustion system creates a drought, it is generated a dust environment with consequent necessity for its elimination of the constant blasting of the dusts on the working material. The invented plant by using a new treatment system, where the toxic residues are put under temperature of about 1.550°, principally permits in comparison with the said current system a structural semplification of the plant consequently reducing the realization and operating costs, a security in the residue inertization so to avoid damages to the human body and to the environment, a smaller quantity of said residue and to increase the working velocity. Acting at about m. 1,20 of depth the injector injects the toxic residues to a pressure of 15-20 BAR into a bath to be maintained at 1.550° where is actuated their elimination by combustion while the remaining aggregate emerges over the fluid.

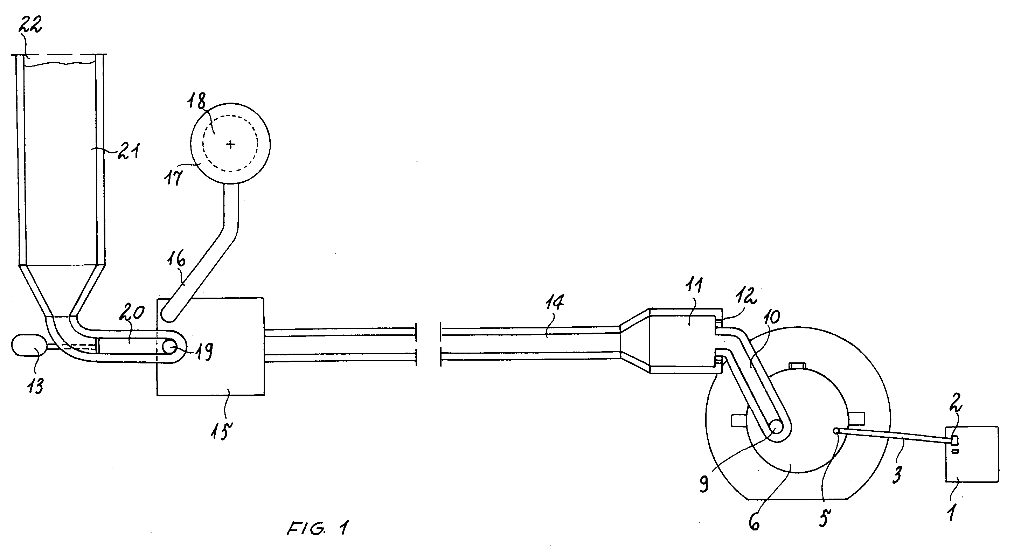

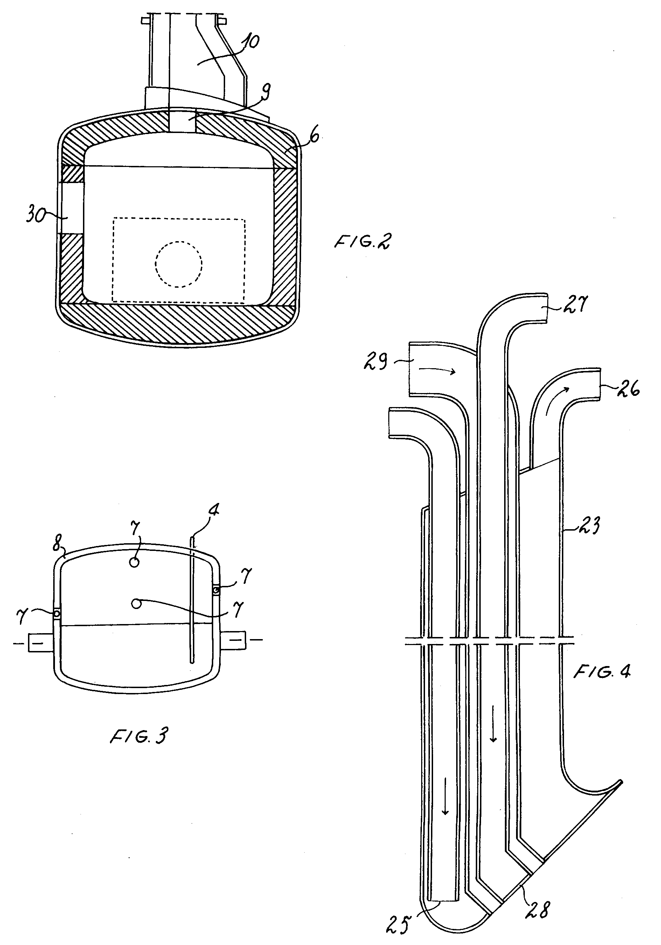

Substantially the invented device foresees a tank 1 from which by a pump 2 through a flexible pipe 3 the toxic goods are injected by an injector 4 through an inlet 5 into a reactor 6, formed by a three-fase arc furnace, where it begins their combustion with consequent scorification in progression. So losting in their weight density the combustion residues come to float onto the cast steel to be maintained to a temperature of 1.550° by means of four burners 7 helicoidally distributed till a some distance from the cover 8 so permitting also to neutralize the gas exhalation of the working goods into the plant space where is not present the bath. Onto the cover 8 is foreseen a hole 9 acting as intake stack for the fumes passing into duct 10 to be then let into combustion chamber 11 equipped with three burners 12. The fumes, burning into combustion chamber 11, by means of an intake system 13 foreseen on the bottom coming into a refractory pipe 14 where is actuated their total combustion with elimination of the eventual toxins remain in sospension. Said fumes then come into a steam boiler 15 and through a duct 16 they come into a steam turbine 17, connected to a hi pot generator 18, they come out to the mouth 19 of the steam boiler 15 and, through a larger refractory duct 20 to determine their slowdown they pass into a duct 21 where are treated with chemical reagents which determine the fragmentation while the suspended particles are kept by an electrostatic filter 22. The injector 4 foresees a main 23 with in its inside a pipe 24 where flows the under pressure water to act as cooling. Said flow through the mouth 25 comes to flood all the inside part of the injector with outlet permits through the mouth 26. The toxic residues go through the duct 27 and they go out from the bottom 28. To permit their combustion it is used such burning compressed air to be injected through a duct 29. The combustion residues formed by slags are then discharged through an outlet 30 rotating of about 10° the reactor 6. A preferred embodiment of the invented plant is illustrated in schematic view in drawings of sheets 1 and 2. In sheet 1 fig. 1 is schematic view of all the plant. In sheet 2 fig. 2 is section view of the reactor 6 with in the upper part the hole 9 acting as intake stack for the fumes coming by the duct 10 into the combustion chamber 11 and with on side the outlet 30 for working residues. Fig. 3 is bewildered view of 90° in comparison with the previous fig. 2 of the reactor 6 to show the four burners 7 and the injector disposition. Fig. 4 is section view of the injector foresees for the present invented plant. In this embodiment the outlet 30 for discharging the working residues is also to be used to load the toxic residues from container or drums. The reactor 6 is to be put into a hollow under the floor for a suitable disposition of its casting ladle structure and to make easy the control operations of the cast steel.

## Claims

1. Elimination plant for toxic residues foreseen a tank (1) from which by a pump (2) through a flexible pipe (3) the toxic goods are injected by an injector (4) through an inlet (5) into a reactor (6) where they begin their combustion with consequent scorification in progression and foreseen a cover (8), characterized in that losting in their weight density the combustion residues come to float onto the cast steel to be maintained to a temperature of 1.550° by means of four burners (7) helicoidally distributed till a some distance from the cover (8) so permitting also to neutralize the gas exhalation of the working goods into the plant space where is not present the bath; onto the same cover (8) is foreseen a hole (9) acting as intake stack for the fumes passing into a duct (10) to be then let into combustion chamber (11) equipped with three burners (12); the fumes burning into combustion chamber (11) by means of an intake system (13) foreseen on the bottom coming into a refractory pipe (14) where is actuated their total combustion with elimination of the eventual toxins remain in sospension; said fumes then come into a steam boiler (15) and through a duct (16) they come into a steam turbine (17), connected to a hi pot generator (18), they come out to a mouth (19) of the steam boiler (15) and, through a larger refractory duct (20) to determine their slowdown they pass into a duct (21) where are treated with chemical reagents which determine the fragmentation while the suspended particles are kept by an electrostatic filter (22).

2. Elimination plant for toxic residues, as per claim 1), in which the injector (4) foresees a main (23) with in its inside a pipe (24) where flows the under pressure water to act cooling, said flow through a mouth (25) comes to flood all the inside part of the jnector with outlet permits through an other mouth (26); the toxic reasidues go through a duct (27) and they go out from the bottom (28); to permit their combustion it is used such burning compressed air to be injected through a duct (29).

3. Elimination plant for toxic residues, as per claim 1), in which the combustion residues formed by slags are then discharged through an outlet (30) rotating of about 10° the reactor (6).

4. Elimination plant for toxic residues characterized in that can be provided that the outlet (30) for discharging the working residues was also used to load the toxic residues from containers or drums.

5. Elimination plant for toxic residues, as per claim 1), in that the reactor (6) is to be put into a hollow under the floor for a suitable disposition of its casting ladle structure and to make easy the control operations of the cast steel.
